# EUROPÄISCHE PATENTSCHRIFT

(11) **EP 1 812 260 B1**
(45) Veröffentlichungstag und Bekanntmachung des Hinweises auf die Patenterteilung: **30.01.2008**
(21) Anmeldenummer: 05796456.1
(22) Anmeldetag: 31.10.2005
(51) Int. Cl.: B60N 2/66

(54) **PNEUMATISCHE LORDOSE-STÜTZE**
PNEUMATIC LORDOSIS SUPPORT
APPUI-LORDOSE PNEUMATIQUE

(30) Priorität: 17.11.2004 CH 189204
(43) Veröffentlichungstag der Anmeldung: 01.08.2007
(73) Patentinhaber: Prospective Concepts AG, 8152 Glattbrugg (CH)
(72) Erfinder: HABEGGER, Daniel, CH-8104 Weiningen (CH)
(74) Vertreter: Salgo, Reinhold Caspar
(86) Internationale Anmeldenummer: PCT/CH2005/000635
(87) Internationale Veröffentlichungsnummer: WO 2006/053453

(56) Entgegenhaltungen:
- EP-A- 1 044 669
- WO-A-01/40012
- WO-A-98/58566
- DE-A1- 10 232 625

## Beschreibung

Die vorliegende Erfindung betrifft eine pneumatische Lordose-Stütze, beispielsweise zur Verwendung in Fahrzeugsitzen, nach dem Oberbegriff des Patentanspruches 1. Pneumatische Lordose-Stützen sind an sich bekannt. Sie bestehen in der Regel aus einem oder mehreren Luftkissen, welche im Lumbarbereich in eine Rückenlehne oder eine Liegefläche integriert sind.

Ein Beispiel für eine pneumatische Lordose-Stütze ist in WO 98/58566 offenbart. Diese Lordose-Stütze besteht aus drei Kissen, wobei mit zwei kleineren Sekundärkissen, welche unter einem grösseren Primärkissen angebracht sind, die Neigung des Primärkissens verändert werden kann. Die Adaptierbarkeit ist jedoch sehr eingeschränkt. Das Primärkissen strebt bei Druckbeaufschlagung eine Kugelform an, was ergonomisch suboptimal ist.

Eine Lordose-Stütze ist ebenfalls bekannt aus der Offenlegungsschrift DE 102 32 625.8, welche den nächstliegenden Stand der Technik darstellt und den Oberbegriff des Anspruchs 1 offenbart.

Ein Problem pneumatischer Lordose-Stützen kann sein, dass sie im Bereich der Wirbelsäule zu hart sind und dadurch, je nach Anatomie des Benutzers, Druckstellen verursachen können.

Die Aufgabe der vorliegenden Erfindung ist die Schaffung einer pneumatischen Lordose-Stütze, welche eine gute ergonomische Stützung des Lumbarbereichs ermöglicht, hohen Ansprüchen bezüglich des Komforts und der Ergonomie zu genügen vermag, insbesondere im Bereich der Wirbelsäule nicht zu Druckstellen führt und deren Stützfunktion einfach und schnell an individuelle Bedürfnisse verschiedener Benutzer angepasst werden kann. Zudem soll die Lordose-Stütze kostengünstig und einfach hergestellt werden können.

Die Lösung der Aufgabe ist wiedergegeben im Patentanspruch 1 hinsichtlich der wesentlichen Merkmale, in den weiteren Patentansprüchen hinsichtlich weiterer vorteilhafter Merkmale. Anhand der beigefügten Zeichnungen wird die Erfindung näher erläutert.

Es zeigen
- Fig. 1: schematische Darstellung eines ersten Ausführungsbeispiels einer Lordose-Stütze in Draufsicht,
- Fig. 2: schematische Darstellung des ersten Ausführungsbeispiels einer Lordose-Stütze im Querschnitt,
- Fig. 3: schematische Darstellung eines zweiten Ausführungsbeispiels einer Lordose-Stütze in Draufsicht,
- Fig. 4: schematische Darstellung eines dritten Ausführungsbeispiels einer Lordose-Stütze in Draufsicht,
- Fig. 5: schematische Darstellung eines vierten Ausführungsbeispiels einer Lordose-Stütze im Querschnitt,
- Fig. 6: schematische Darstellung eines ersten Ausführungsbeispiels eines Zusatzkissens in Draufsicht,
- Fig. 7: schematische Darstellung eines zweiten Ausführungsbeispiels eines Zusatzkissens in Draufsicht.

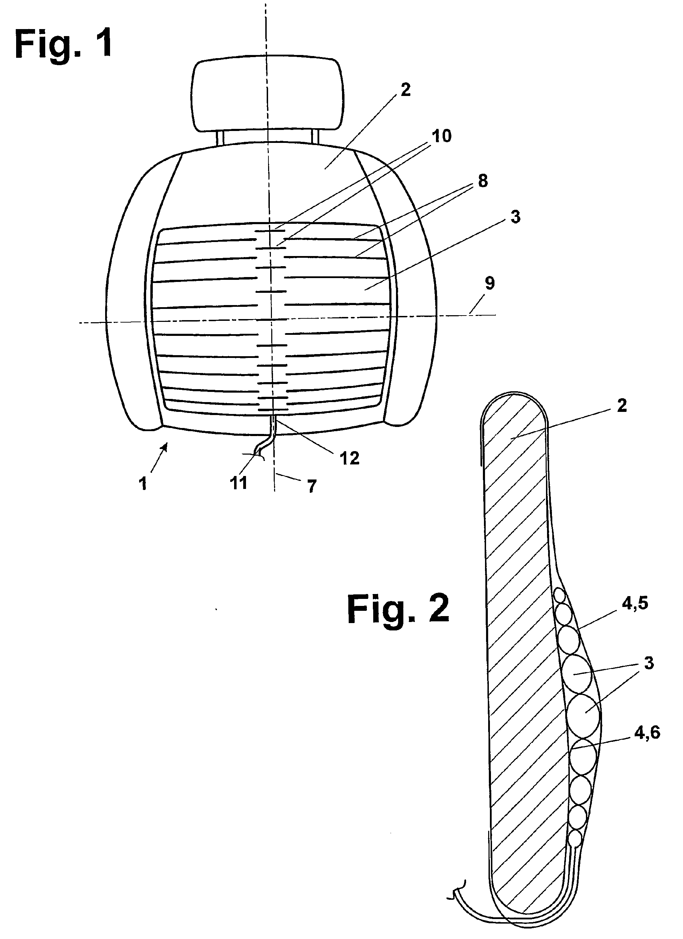

In Fig. 1 und Fig. 2 ist ein erstes Ausführungsbeispiel einer pneumatischen Lordose-Stütze 1 schematisch dargestellt. Die Lordose-Stütze 1 ist in eine Rückenlehne 2 eines Sitzes integriert. Die Lordose-Stütze 1 besteht aus einem luftdichten Kissen 3, hergestellt aus einer luftdichten flexiblen Membran 4, welches im Lumbarbereich auf der Rückenlehne 2 aufliegt und an der Rückenlehne 2 mit Befestigungsmitteln so befestigt ist, dass das Kissen 3 nicht verrutscht. Das Kissen 3 weist eine dem Rücken des Benutzers zugewandte Vorderseite 5 auf und eine Rückseite 6, welche der Rückenlehne 2 des Sitzes zugewandt ist.

Eine Lordose-Stütze 1 steht in Beziehung zum Körper des Benutzers. Für eine bessere Verständlichkeit der Beschreibung wird im Folgenden 'vertikal' synonym für 'parallel zur Richtung der Wirbelsäule des Benutzers' verwendet, auch wenn das streng nur bei einer senkrechten Rückenlehne 2 stimmt. Eine Lordose-Stütze 1 kann jedoch auch in liegender oder halbliegender Stellung benutzt werden. Entsprechend wird 'horizontal' synonym zur 'Richtung der Schulterlinie des Benutzers' verwendet. Vertikal und horizontal beziehen sich somit, wenn nicht anders erwähnt, auf das lokale Koordinatensystem des Benutzers.

Das Kissen 3 weist beidseitig einer vertikalen Mittellinie 7 mehrere im Wesentlichen horizontale linienförmige Verbindungen 8 der Vorderseite 5 und der Rückseite 6 des Kissens 3 auf. Diese Verbindungen 8 sind nicht über die ganze Breite des Kissens 3 durchgehend, sondern weisen im Bereich der Mittellinie 7 eine Unterbrechung auf. Die Verbindungen 8 können beispielsweise bei einem Kissen 3 aus Kunststofffolie mittels Kleben oder Schweissen hergestellt werden.

Der vertikale Abstand der Verbindungen 8 bestimmt die Radien der durch Verbindungen 8 und Membran 4 definierten horizontal liegenden Schlauchenden und damit die Dicke und den vertikalen Querschnitt der Lordose-Stütze 1 bei Beaufschlagung mit Druckluft. Aus Fig. 2 ist ersichtlich, dass mittels unterschiedlicher Distanzen zwischen den Verbindungen 8 eine ergonomische Form der Lordose-Stütze 1 erreicht werden kann. Beispielsweise nimmt die vertikale Distanz zwischen den horizontalen Verbindungen 8 von der horizontalen Mittellinie 9 des Kissens 3 sowohl gegen den oberen als auch gegen den unteren Rand des Kissens 3 kontinuierlich ab. Im Bereich der vertikalen Mittellinie 7 weist das Kissen 3 zentrale, ebenfalls im Wesentlichen horizontale Verbindungen 10 auf. Allerdings sind diese in Bezug auf die seitlichen Verbindungen 8 vertikal versetzt. Diese Anordnung der Verbindungen 8, 10 erzeugt einen erstaunlich komfortablen und ergonomischen Effekt. Im Bereich der vertikalen Mittellinie 7 verhält sich das Kissen 3, als wäre die Distanz zwischen den Verbindungen 8, 10 halbiert, da sowohl die seitlichen Verbindungen 8 als auch die zentralen Verbindungen 10 die Spannungsverhältnisse in der Membran 4 beeinflussen. Die Spannung in einer mit Druckluft beaufschlagten Membran 4 ist proportional sowohl zum Überdruck als auch zum Radius der Membran 4. Im Bereich der vertikalen Mittellinie 7 und speziell im Bereich der beiden vertikalen Linien an welchen seitliche Verbindungen 8 und zentrale Verbindungen 10 vertikal verschoben aneinander stossen ist somit die Spannung in der Membran 4 verkleinert. Dadurch ist das Kissen 3 an dieser Stelle weicher und vorstehende Teile der Wirbelsäule tauchen leicht und weich in die Lordose-Stütze 1 ein, während seitlich davon der Rücken im Bereich der Rückenmuskulatur fester und härter gestützt wird. Die Druckluftversorgung via eine Leitung 11 erfolgt über ein im unteren Bereich des Kissens angebrachtes Ventil 12. Das Ventil 12 kann im Prinzip an jeder Stelle des Kissens 3 angebracht werden. Die optimale Stelle ergibt sich aus der Leitungsführung zur Druckluftversorgung. Aus Sicherheitsgründen kann am Kissen 3 oder in der Leitung 11 ein Sicherheitsventil angebracht sein, welches sich bei einem definierten Überdruck öffnet, um ein Platzen des Kissens 3 bei Überlastung zu verhindern. Eine günstigere Alternative zu einem Sicherheitsventil kann eine in der Membran 4 eingearbeitete Sollbruchstelle sein, welche bei Überschreiten eines kritischen Überdruckes reisst und so zu einem kontrollierten Membranbruch führt. Je nach Stützbedarf kann die Lordose-Stütze 1 mit mehr oder weniger hohem Druck beaufschlagt werden. Auf die für diesen Zweck notwendige Steuer- und Regeleinrichtung, Bedienungseinheit und Drucklufterzeugereinheit wird hier nicht näher eingegangen. Solche Systeme sind dem Fachmann in verschiedenster Ausführung bekannt und somit Stand der Technik.

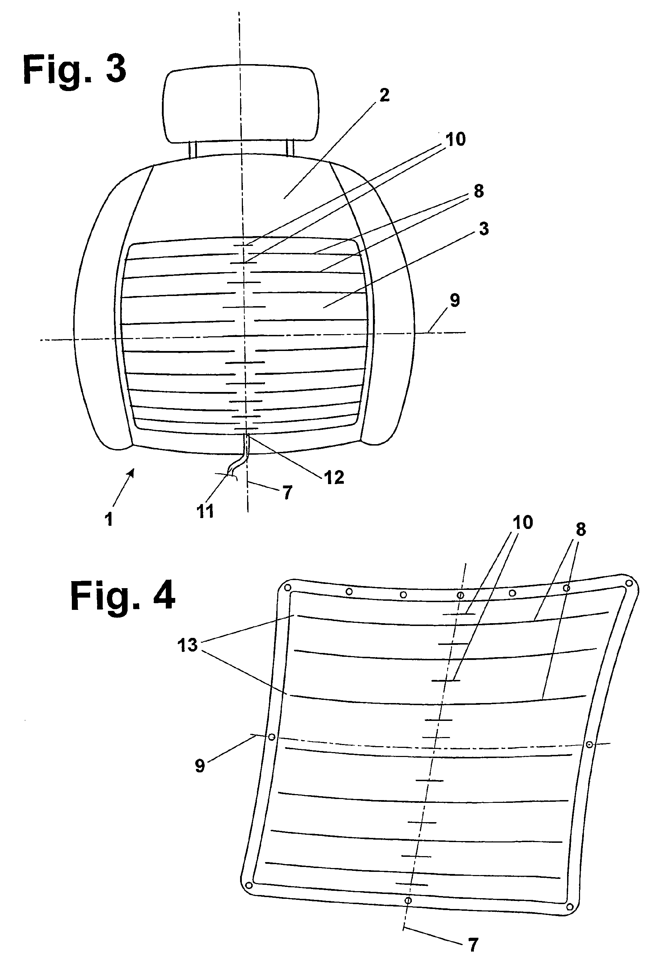

Fig. 3 zeigt ein zweites Ausführungsbeispiel einer erfindungsgemässen Lordose-Stütze 1. Im Bereich der vertikalen Mittellinie 7 überlappen die seitlichen Verbindungen 8 und die zentralen horizontalen Verbindungen 10. Dadurch wird in diesem Bereich die Spannung der Membran 4 im Vergleich zu den anderen Bereichen des Kissens 3 zusätzlich erniedrigt und das Kissen 3 an dieser Stelle weicher. Ausserdem kann die Länge der zentralen Verbindungen 10 sowie die Länge der Unterbrüche der seitlichen Verbindungen 8 unterschiedlich gewählt werden. Es ist erfindungsgemäss, zwischen zwei seitlichen Verbindungen 8 mehrere oder auch gar keine zentrale Verbindung 10 anzubringen.

In Fig. 4 ist ein drittes Ausführungsbeispiel dargestellt. Die seitlichen Verbindungen 8 sind zu einer durchgehenden horizontalen Verbindung 8 vereint. Um den Druckaufbau im ganzen Kissen 3 zu ermöglichen braucht es jedoch in jeder Verbindung 8 mindestens eine Unterbrechung für den Luftaustausch zwischen den durch die Verbindungen 8 abgetrennten Kompartimenten des Kissens 3. In diesem Ausführungsbeispiel sind Luftdurchlässe 13 an beiden Rändern des Kissens 3 angeordnet. Ein oder mehrere Luftdurchlässe 13 können an frei wählbaren Stellen der Verbindung 8 angeordnet sein. Im Bereich der vertikalen Mittellinie 7 sind wiederum zentrale Verbindungen 10 mit der oben beschriebenen Funktion vorhanden.

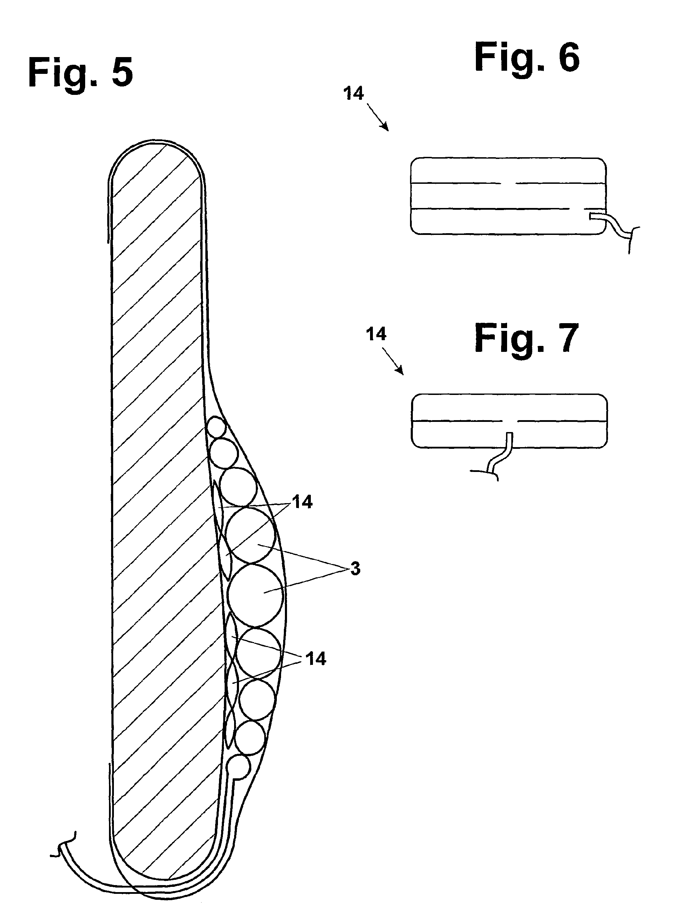

Fig. 5 zeigt ein viertes Ausführungsbeispiel einer pneumatischen Lordose-Stütze 1 im Seitenschnitt. Zwischen einem Kissen 3 gemäss den ersten drei Ausführungsbeispielen und der Rückenlehne 2 sind zwei Zusatzkissen 14 mit separater Luftzuführung angebracht. Das obere Zusatzkissen 14 ermöglicht bei Beaufschlagung mit Druckluft eine Verschiebung der stärksten Auswölbung der Lordose-Stütze 1 nach oben und erlaubt so eine ergonomischen Anpassung beispielsweise für sehr grosse Benutzer. Analog ermöglicht das untere Zusatzkissen 14 eine Anpassung beispielsweise für sehr kleine Benutzer. Kissen 3 und Zusatzkissen 14 können unabhängig voneinander mit Druck beaufschlagt und wieder entlastet werden. Dies ermöglicht, mittels zweier oder mehr Zusatzkissen 14 unter dem Kissen 3 einen Massageeffekt zu erzeugen, indem die Zusatzkissen 14 beispielsweise von unten nach oben oder von oben nach unten der Reihe nach mit Druck beaufschlagt und anschliessend wieder entlastet werden. Dadurch entsteht eine massierende sich nach oben oder nach unten bewegende Wellenbewegung an der Vorderseite 5 der Lordose-Stütze 1. Es können weitere anregende, entspannende, beruhigende und lockernde Bewegungsmuster als Programme in der Steuerungseinheit gespeichert und vom Benutzer abgerufen werden. Die Druckbeaufschlagung und Entlastung kann in rhythmischer oder stochastischer, schneller oder langsamer Abfolge programmiert werden, je nach gewünschtem Effekt. Im Erfindungsgedanken eingeschlossen ist beispielsweise auch eine Wachhaltefunktion, welche beispielsweise bei langen nächtlichen Fahrten die Lordose-Stütze 1 kurzzeitig stochastisch verstellt und somit beispielsweise der Monotonie einer Autobahnfahrt entgegenwirkt.

In den Fig. 6 und Fig. 7 sind zwei mögliche Formen solcher Zusatzkissen 14 gezeigt. Grundsätzlich ist es auch erfindungsgemäss solche Zusatzkissen 14 ohne horizontale Verbindungen 8 als einfache günstige Schläuche auszuführen. Andererseits können die Zusatzkissen auch in der gleichen Bauart wie das Kissen 3 hergestellt werden.

Die Herstellung eines Kissens 3 wie in Fig. 4 dargestellt kann auf einfache, effiziente und günstige Weise erfolgen, indem beispielsweise eine obere und eine untere Kunststofffolie mittels eines Stempels in der Form der gewünschten Verbindungen 8, 10 zusammengeschweisst werden. Die beiden Kunststofffolien bilden die Vorderseite 5 und die Rückseite 6 des Kissens 3. Das Ventil 12 kann in einem zweiten Schritt angebracht werden. Am Rand des Kissens 3 können die Befestigungsmittel, beispielsweise Ösen, angebracht sein. Die Zusatzkissen 14 können beispielsweise ebenfalls am Rand des Kissens 3 mit diesem befestigt werden.

Eine weitere erfindungsgemässe Ausführung eines Kissens 3 kann geschaffen werden, indem eine Unterteilung des Kissens 3 in mehrere Teilkissen mit unterschiedlichen Drucken erfolgt. Beispielsweise wird das Kissen 3 mittels einer unterbruchsfreien Verbindung 8 horizontal in zwei Teilkissen unterteilt. Der Mehraufwand für die Herstellung des Kissens 3 beschränkt sich auf den Einbau eines oder mehrerer zusätzlicher Ventiles 12, die eine getrennte Beaufschlagung der Teilkissen mit Druckluft ermöglichen. Die Unterteilung in mehrere Teilkissen kann auch in vertikaler Richtung erfolgen. Die Zusatzkissen 14 können ebenfalls in mehrere Teilkissen unterteilt werden.

Sämtliche durch den Fachmann auszuführenden Kombinationen der in den obigen Ausführungsbeispielen offenbarten Merkmale sind im Erfindungsgedanken enthalten.

## Patentansprüche

1. Pneumatische Lordose-Stütze (1) bestehend aus mindestens einem mit Druck beaufschlagbaren Kissen (3) mit einer Vorderseite (5) und einer Rückseite (6), **dadurch gekennzeichnet, dass**
- das Kissen (3) mindestens eine nicht durchgehende erste im Wesentlichen zur Wirbelsäule eines Benutzers rechtwinklige Verbindung (8) der Vorderseite (5) mit der Rückseite (6) verfügt, welche das Kissen in Kompartimente aufgliedert,
- das Kissen (3) im Bereich einer im Wesentlichen zur Wirbelsäule des Benutzers parallelen Mittellinie (7) des Kissens (3) weitere zentrale im Wesentlichen zur Wirbelsäule des Benutzers rechtwinklige Verbindungen (10) der Vorderseite (5) mit der Rückseite (6) aufweist, welche in Richtung der Wirbelsäule des Benutzers versetzt sind bezüglich der ersten Verbindungen (8) und kürzer sind als die halbe Breite des Kissens (3).

2. Pneumatische Lordose-Stütze (1) nach Patentanspruch 1, **dadurch gekennzeichnet, dass**
die Verbindung (8) eine Unterbrechung im Bereich der Mittellinie (7) aufweist und die Länge der zentralen Verbindungen (10) im Wesentlichen mit der Länge der Unterbrechung in der Verbindung (8) übereinstimmt.

3. Pneumatische Lordose-Stütze (1) nach Patentanspruch 1, **dadurch gekennzeichnet, dass**
die Verbindung (8) an beiden Seiten des Kissens Luftdurchlässe (13) frei lässt und im Bereich der Mittellinie (7) durchgehend verläuft.

4. Pneumatische Lordose-Stütze (1) nach einem der Patentansprüche 1 bis 3, **dadurch gekennzeichnet, dass**
mindestens ein Kompartiment zwischen den Verbindungen (8) mehr als eine zentrale Verbindung (10) aufweist.

5. Pneumatische Lordose-Stütze (1) nach einem der Patentansprüche 1 bis 4, **dadurch gekennzeichnet, dass**
die Distanz zwischen den Verbindungen (8) vom breitesten Kompartiment mit der grössten Distanz zwischen den Verbindungen (8) in Richtung der Mittellinie (7) gegen beide Ränder des Kissens (3) hin abnimmt, womit auch die Dicke des mit Druckluft beaufschlagten Kissens (3) gegen den oberen und den unteren Rand hin abnimmt.

6. Pneumatische Lordose-Stütze (1) nach einem der Patentansprüche 1 bis 5, **dadurch gekennzeichnet, dass**
auf der Rückseite des Kissens (3) mindestens ein weiteres Zusatzkissen (14) vorhanden ist, welches je Mittel zur vom Kissen (3) unabhängigen Druckluftversorgung aufweist und dadurch einen vom Kissen (3) und den weiteren Zusatzkissen (14) unterschiedlichen Druck aufweisen kann.

7. Pneumatische Lordose-Stütze (1) nach Patentanspruch 6, **dadurch gekennzeichnet, dass**
mindestens zwei Zusatzkissen (14) auf der Rückseite des Kissens (3) vorhanden sind, welche unabhängig voneinander mit Druckluft beaufschlagt werden können,
weiter eine Steuerung vorhanden ist, welche die Zusatzkissen (14) unabhängig voneinander mit Druckluft beaufschlagt und wieder entlastet, um so einen Massageeffekt für den Benutzer herbeizuführen.

8. Pneumatische Lordose-Stütze (1) nach einem der Patentansprüche 1 bis 4, **dadurch gekennzeichnet, dass**
das Kissen (3) aus zwei mittels Stempel in Verbindungen (8, 10) und Umrandung verschweissten Kunststofffolien hergestellt ist.

9. Pneumatische Lordose-Stütze (1) nach einem der Patentansprüche 1 bis 8, **dadurch gekennzeichnet, dass**
Befestigungsmittel am Rande des Kissens (3) vorhanden sind mittels welcher das Kissen positioniert werden kann.

10. Pneumatische Lordose-Stütze (1) nach einem der Patentansprüche 1 bis 9, **dadurch gekennzeichnet, dass**
das Kissen (3) und/oder die Zusatzkissen (14) jeweils in zwei oder mehr luftdichte Teilkissen unterteilt sind, wobei die Teilkissen unabhängig voneinander mit Druckluft versorgt werden und unterschiedliche Drucke aufweisen können.

11. Pneumatische Lordose-Stütze (1) nach Patentanspruch 10, **dadurch gekennzeichnet, dass**
eine Steuerung vorhanden ist, welche die Teilkissen unabhängig voneinander mit Druckluft beaufschlagt und wieder entlastet, um so einen Massageeffekt für den Benutzer herbeizuführen.

12. Pneumatische Lordose-Stütze (1) nach einem der Patentansprüche 1 bis 11, **dadurch gekennzeichnet, dass**
Mittel zur Zu- und Wegführung von komprimierter Luft, eine Steuer- und Kontrolleinheit, ein Mittel zur Erzeugung von komprimierter Luft, eine Bedienungseinheit, vorhanden sind.

## Claims

1. A pneumatic lordosis support (1) consisting of at least one pressurized cushion (3) comprising a front side (5) and a rear side (6), **characterized in that**
- the cushion (3) has at least one uncontinuous first connection (8) of the front side (5) with the rear side (6), said connection (8) being substantially at a right angle to the spine of a user and subdividing the cushion into compartments,
- the cushion (3), in the region of a center line (7) of the cushion (3) being substantially parallel to the spine of the user, encompasses further central connections (10) of the front side (5) with the rear side (6) being substantially perpendicular to the spine of the user, said connections being offset in the direction of the spine of the user with reference to the first connections (8) and being shorter than half the width of the cushion (3).

2. The pneumatic lordosis support (1) according to patent claim 1, **characterized in that**
the connection (8) encompasses a break in the region of the center line (7) and the length of the central connections (10) substantially corresponds to the length of the break in the connection (8).

3. The pneumatic lordosis support (1) according to patent claim 1, **characterized in**
**that** the connection (8) to both sides of the cushion leaves open air passages (13) and runs continuously in the region of the center line (7).

4. The pneumatic lordosis support (1) according to one of patent claims 1 to 3, **characterized in that** at least one compartment between the connections (8) encompasses more than one central connection (10).

5. The pneumatic lordosis support (1) according to one of patent claims 1 to 4, **characterized in that** the distance between the connections (8) decreases from the broadest compartment comprising the greatest distance between the connections (8) in the direction of the center line (7) towards both edges of the cushion (3), whereby the thickness of the pressurized cushion (3) also decreases towards the upper and the lower edge.

6. The pneumatic lordosis support (1) according to one of patent claims 1 to 5, **characterized in that**, on the rear side of the cushion (3), at least one further auxiliary cushion (14) is available, which, in each case, encompasses means for supplying air independent from the cushion (3) and can thus encompass a pressure, which differs from that of the cushion (3) and the further auxiliary cushions (14).

7. The pneumatic lordosis support (1) according to patent claim 6,
**characterized in that**
at least two auxiliary cushions (14) which can be pressurized independent from one another, are available on the rear side of the cushion (3),
furthermore a control being available, which pressurizes and again releases the auxiliary cushions (14) independent from one another so as to bring about a massage effect for the user.

8. The pneumatic lordosis support (1) according to one of patent claims 1 to 4, **characterized in that** the cushion (3) is made of two plastic foils, which are fused by means of dies in connections (8, 10) and edges.

9. The pneumatic lordosis support (1) according to one of patent claims 1 to 8, **characterized in that** fastening means are available at the edge of the cushion (3), by means of which the cushion can be positioned.

10. The pneumatic lordosis support (1) according to one of patent claims 1 to 9, **characterized in that** the cushion (3) and/or the auxiliary cushions (14) are each divided into two or more air-tight partial cushions, with the partial cushions being supplied with compressed air independent from one another and can have different pressures.

11. The pneumatic lordosis support (1) according to patent claim 10, **characterized in that**
a control is available, which pressurizes and again releases the partial cushions independent from one another so as to bring about a massage effect for the user.

12. The pneumatic lordosis support (1) according to one of patent claims 1 to 11, **characterized in that** means for supplying and leading away compressed air, an operating and control unit, a means for generating compressed air and an operating unit are available.

## Revendications

1. Appui lordose pneumatique (1) constitué d'au moins un coussin (3) sous pression, avec une face avant (5) et une face arrière (6), **caractérisé en ce que**
- le coussin (3) comporte au moins une liaison (8) discontinue entre la face avant (5) et la face arrière (6), liaison qui est essentiellement rectangulaire par rapport à la colonne vertébrale d'un utilisateur et qui divise le coussin en compartiments,
- dans la région d'une ligne médiane (7) du coussin (3), ligne qui est essentiellement parallèle à la colonne vertébrale de l'utilisateur, le coussin (3) comporte d'autres liaisons centrales (10) entre la face avant (5) et la face arrière (6), liaisons qui sont essentiellement rectangulaires par rapport à la colonne vertébrale de l'utilisateur et qui sont décalées par rapport aux premières liaisons (8) dans la direction de la colonne vertébrale de l'utilisateur, et plus courtes que la moitié de la largeur du coussin (3).

2. Appui lordose pneumatique (1) selon la revendication 1, **caractérisé en ce que**
la liaison (8) comporte une discontinuité dans la région de la ligne médiane (7) et **en ce que** la longueur des liaisons centrales (10) correspond essentiellement à la longueur de la discontinuité dans la liaison (8).

3. Appui lordose pneumatique (1) selon la revendication 1, **caractérisé en ce que**
la liaison (8) libère des passages d'air (13) sur les deux côtés du coussin et s'étend de façon continue dans la région de la ligne médiane (7).

4. Appui lordose pneumatique (1) selon l'une des revendications 1 à 3, **caractérisé en ce que**
au moins un compartiment entre les liaisons (8) comporte plus d'une liaison centrale (10).

5. Appui lordose pneumatique (1) selon l'une des revendications 1 à 4, **caractérisé en ce que**
la distance entre les liaisons (8) du compartiment le plus large avec la plus grande distance entre les liaisons (8) en direction de la ligne médiane (7) diminue vers les deux bords du coussin (3), et l'épaisseur du coussin (3) rempli d'air comprimé diminuant également de ce fait vers le bord supérieur et vers le bord inférieur.

6. Appui lordose pneumatique (1) selon l'une des revendications 1 à 5, **caractérisé en ce que**
il est prévu au moins un autre coussin supplémentaire (14) à l'arrière du coussin (3), qui comporte des moyens pour l'alimentation en air comprimé indépendamment du coussin (3) et qui peut ainsi comporter une pression différente de celle du coussin (3) et des autres coussins supplémentaires (14).

7. Appui lordose pneumatique (1) selon la revendication 6, **caractérisé en ce que**
au moins deux coussins supplémentaires (14) pouvant être remplis indépendamment l'un de l'autre en air comprimé sont prévus sur la face arrière du coussin (3),
et **en ce que** par ailleurs il est prévu une commande permettant de remplir les coussins supplémentaires (14) d'air comprimé ou encore de les dégonfler, toujours indépendamment l'un de l'autre, pour ainsi produire un effet de massage pour l'utilisateur.

8. Appui lordose pneumatique (1) selon l'une des revendications 1 à 4, **caractérisé en ce que**
le coussin (3) est réalisé à partir de deux films synthétiques soudées à l'endroit des liaisons (8, 10) et d'une bordure au moyen d'un poinçon.

9. Appui lordose pneumatique (1) selon l'une des revendications 1 à 8, **caractérisé en ce que**
des moyens de fixation, au moyen desquels le coussin peut être positionné, sont prévus sur le bord du coussin (3).

10. Appui lordose pneumatique (1) selon l'une des revendications 1 à 9, **caractérisé en ce que**
le coussin (3) et/ou les coussins supplémentaires (14) sont respectivement divisés en deux ou plusieurs coussins partiels hermétiques, les coussins partiels étant alimentés en air comprimé indépendamment les uns des autres et pouvant comporter des pressions différentes.

11. Appui lordose pneumatique (1) selon la revendication 10, **caractérisé en ce que**
une commande est prévue pour le remplissage en air comprimé ou encore le dégonflage des coussins partiels, toujours indépendamment les uns des autres, pour ainsi produire un effet de massage pour l'utilisateur.

12. Appui lordose pneumatique (1) selon l'une des revendications 1 à 11, **caractérisé en ce que**
il est prévu des moyens pour l'alimentation et l'évacuation de l'air comprimé, une unité de commande et de contrôle, un moyen pour la production de l'air comprimé et une unité de commande.
